# EUROPEAN PATENT APPLICATION

(11) **EP 4 851 821 A1**
(43) Date of publication of application: **09.12.2026**
(21) Application number: 26179787.2
(22) Date of filing: 20.05.2026
(51) Int. Cl.: G06F 16/3329

(54) **ANSWER GENERATION METHOD AND ANSWER GENERATION SYSTEM**

(30) Priority: 05.06.2025 JP 2025094404
(71) Applicant: Fsas Technologies Inc., Nakahara-ku Kawasaki-shi, Kanagawa 211-0012 (JP)
(72) Inventor: SHIMIZU, Takashi, Kawasaki-shi, Kanagawa, 211-0012 (JP)
(74) Representative: Hoffmann Eitle

(57) **Abstract**

An information processing apparatus assigns credential information to a plurality of pieces of index information in each of which a character string and a tensor are associated with each other in advance, acquires a question sentence from a user, generates a tensor for the question sentence, extracts, from the plurality of pieces of index information, first index information associated with a tensor close to the tensor for the question sentence based on the tensor for the question sentence and tensors of the plurality of pieces of index information, extracts, as second index information, the first index information to which the credential information matching credential information of the user is assigned based on the credential information assigned to the first index information and the credential information of the user, and generates an answer sentence to the question sentence based on the second index information.

## Description

### FIELD

The embodiment discussed herein is related to an answer generation method and the like.

### BACKGROUND

For example, a Large Language Model (LLM) is composed of a tokenizer and attention.

The tokenizer serves to divide the input text into units suitable for processing. The tokenizer divides the text into tokens on a word basis and converts each divided token into a tensor interpretable by the model. For example, the tokenizer, upon receiving an input of the text "I am a cat", divides the text into tokens "I", "am", "a", and "cat", converts each token into a tensor, and outputs a result of the conversion to the attention.

The attention generates a contextually appropriate text by performing processing in consideration of context based on the tensor of each token acquired from the tokenizer and calculating a probability of a next word. For example, the attention, upon receiving tensors for "I", "am", "a", and "cat" sequentially from the tokenizer, calculates the probability of the next word and outputs "I have, as yet, no name", which has the highest probability.

Here, in the above-described LLM, the knowledge acquired during pre-training is fixed, and thus may have difficulty handling new information or real-time data. One approach to solve this problem is a technique called Retrieval-Augmented Generation (RAG).

For example, in RAG, upon receiving a question sentence from a user, information regarding the question sentence (index information) is retrieved from a database, and an answer sentence to the question sentence is generated by providing the index information and the question sentence to the LLM.
Patent Literature 1: Japanese Patent No. 7486863
Patent Literature 2: International Publication Pamphlet No. WO 2009/017135 A
Patent Literature 3: Japanese Laid-open Patent Publication No. 2002-7674 A
Patent Literature 4: Japanese Laid-open Patent Publication No. 2019-211966 A

However, in the above-described related techniques, information leakage may occur.

For example, even when confidential information is included in the database, if the confidential information is relevant to a question sentence from a user, index information including such confidential information is provided to the LLM. In such a case, the LLM may generate an answer sentence including the confidential information, which leads to information leakage.

In one aspect, the embodiment discussed herein is intended to provide an answer generation method and an answer generation system capable of suppressing information leakage when generating an answer sentence to a question sentence.

### SUMMARY

According to an aspect of the embodiments, an answer generation method executed by a computer, includes: assigning credential information to a plurality of pieces of index information in each of which a character string and a tensor are associated with each other in advance; acquiring a question sentence from a user; generating a tensor for the question sentence; extracting, from the plurality of pieces of index information, first index information associated with a tensor close to the tensor for the question sentence, based on the tensor for the question sentence and tensors of the plurality of pieces of index information; extracting, as second index information, the first index information to which the credential information matching credential information of the user is assigned, based on the credential information assigned to the first index information and the credential information of the user; and generating an answer sentence to the question sentence based on the second index information.

### BRIEF DESCRIPTION OF DRAWINGS

FIG. 1 is a diagram for describing embedding processing by RAG;
FIG. 2 is a diagram for describing answer generation processing by RAG;
FIG. 3 is a diagram for supplementarily describing issues of RAG;
FIG. 4 is a diagram for describing Reference Technique 1;
FIG. 5 is a diagram for describing Reference Technique **2;**
FIG. 6 is a diagram for describing embedding processing according to the present embodiment;
FIG. 7 is a diagram for describing answer generation processing according to the present embodiment;
FIG. 8 is a diagram for describing filtering according to the present embodiment;
FIG. 9 is a functional block diagram illustrating a configuration of an information processing apparatus according to the present embodiment;
FIG. 10 is a flowchart illustrating a processing procedure of embedding processing executed by the information processing apparatus;
FIG. 11 is a flowchart illustrating a processing procedure of answer generation processing executed by the information processing apparatus;
FIG. 12 is a diagram for describing other operations of embedding processing executed by the information processing apparatus;
FIG. 13 is a diagram illustrating an example of an answer generation system; and
FIG. 14 is a diagram illustrating an exemplary hardware configuration of a computer that implements functions similar to functions of the information processing apparatus according to the embodiment.

### DESCRIPTION OF EMBODIMENTS

Preferred embodiments will be explained with reference to accompanying drawings. Hereinafter, embodiment of an answer generation method and an answer generation system in the present application will be described in detail with reference to the drawings. Note that the present invention is not limited by this embodiment.

Prior to describing the present embodiment, a supplementary description of RAG will be provided. For example, RAG executes embedding processing and answer generation processing. In the following description, an entity that executes the embedding processing and the answer generation processing is referred to as a "conventional apparatus".

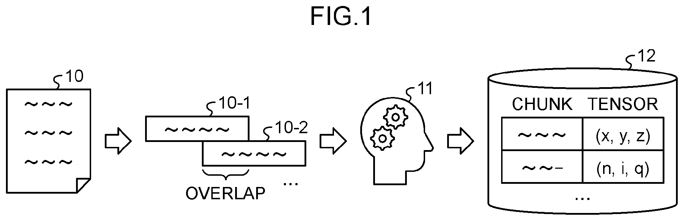

FIG. 1 is a diagram for describing embedding processing by RAG. The conventional apparatus extracts a plurality of chunks 10-1 and 10-2 from data 10. In FIG. 1, the chunks 10-1 and 10-2 are illustrated for convenience of description, but the illustration is not limited to this example, and chunks subsequent to the chunk 10-2 may be included.

The data 10 is text data or the like. The chunks 10-1 and 10-2 are data obtained by extracting a character string having a predetermined character length (e.g., 50 characters) from the data 10. Moreover, in the preceding and succeeding chunks, a portion of the character strings overlaps. For example, the chunk 10-1 is a character string from the beginning to the 50th character of the data 10. The chunk 10-2 is a character string ranging from the (1+n)-th character to the (50+n)-th character counted from the head of the characters.

The conventional apparatus calculates tensors of the chunks 10-1 and 10-2 using an embedding model 11, associates the chunks with the tensors, and registers the association in an index table 12. For example, when the tensor of the chunk 10-1 is (x, y, z), the conventional apparatus associates the chunk 10-1 with the tensor (x, y, z) and registers the association in the index table 12. When the tensor of the chunk 10-2 is (n, i, q), the conventional apparatus associates the chunk 10-2 with the tensor (n, i, q) and registers the association in the index table 12.

As described above, by the conventional apparatus performing the embedding processing, the index table 12 is generated in which each chunk extracted from the data 10 is associated with a tensor.

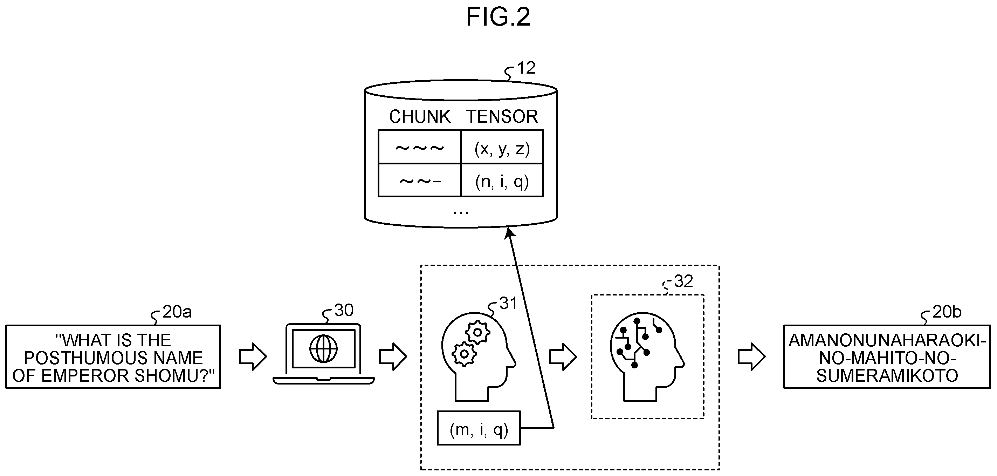

FIG. 2 is a diagram for describing answer generation processing by RAG. A user inputs a question sentence 20a into the conventional apparatus using a front end 30 or the like. For example, the question sentence 20a is, "What is the posthumous name of Emperor Shomu?" The conventional apparatus calculates a tensor (m, i, q) of the question sentence 20a using an embedding model 31.

The conventional apparatus compares the tensor (m, i, q) of the question sentence 20a with each tensor in the index table 12 and acquires a chunk associated with a tensor having a distance from the tensor (m, i, q) that is less than a threshold. The acquired chunk serves as information that acts as a clue for an LLM model 32 when generating an answer sentence to the question sentence 20a.

The conventional apparatus acquires an answer sentence 20b from the LLM model 32 by inputting the question sentence 20a and the acquired chunk into the LLM model 32. For example, the answer sentence 20b is "Amanonunaharaoki-no-mahito-no-sumeramikoto". The conventional apparatus causes the answer sentence 20b to be displayed on the front end 30 or the like.

As described above, when the question sentence is acquired, the conventional apparatus acquires, from the index table 12, a chunk having a distance from the tensor of the question sentence that is less than the threshold, inputs the question sentence and the acquired chunk into the LLM model 32, and thereby generates an answer sentence.

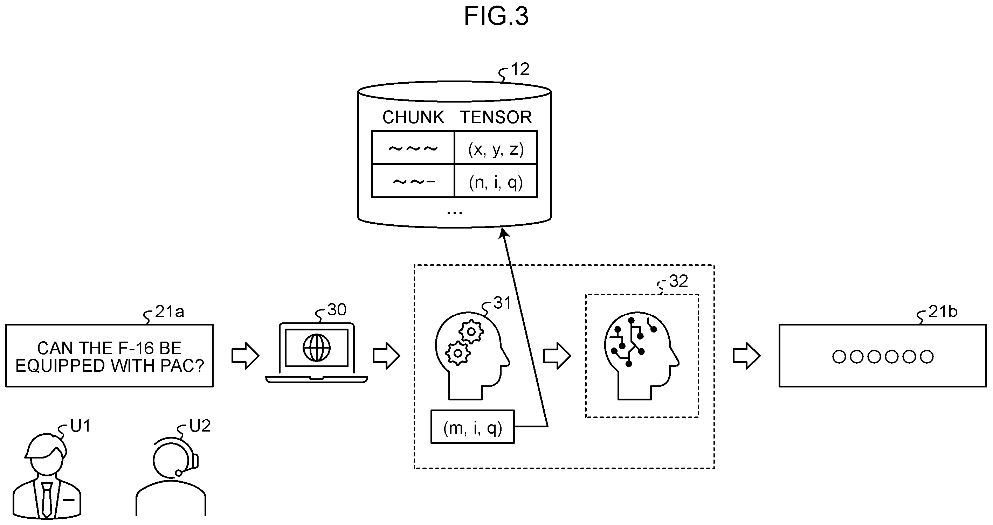

Subsequently, a supplementary description will be provided regarding the issues of RAG described in FIGS. 1 and **2****.** FIG. 3 is a diagram for supplementarily describing issues of RAG. For example, the description will be provided using an authorized user U1 and an unauthorized user U2. The authorized user U1 is a person who is permitted to handle confidential information of the data 10 in FIG. **1****.** The unauthorized user U2 is a person who is not permitted to handle the confidential information of the data 10 in FIG. **1****.**

For example, when the authorized user U1 operates the front end 30 to input a question sentence 21a, the processing described with reference to FIG. 2 is executed, and an answer sentence 21b is output. Even when confidential information is included in the answer sentence 21b, information leakage does not occur as long as the person who has input the question sentence 21a is the authorized user U1.

On the other hand, when the unauthorized user U2 operates the front end 30 and inputs the question sentence 21a, the processing described with reference to FIG. 2 is similarly executed, and the answer sentence 21b is output. If confidential information is included in the answer sentence 21b, information leakage occurs when the person who has input the question sentence 21a is the unauthorized user U2.

As simple approaches for resolving the information leakage problem described in FIG. 3, Reference Technique 1 and Reference Technique 2 are conceivable. Such Reference Technique 1 and Reference Technique 2 are techniques conceived by the inventors and do not correspond to related art. Reference Technique 1 and Reference Technique 2 will be described below in sequence. An entity that executes processing of Reference techniques 1 and 2 is referred to as a "reference apparatus".

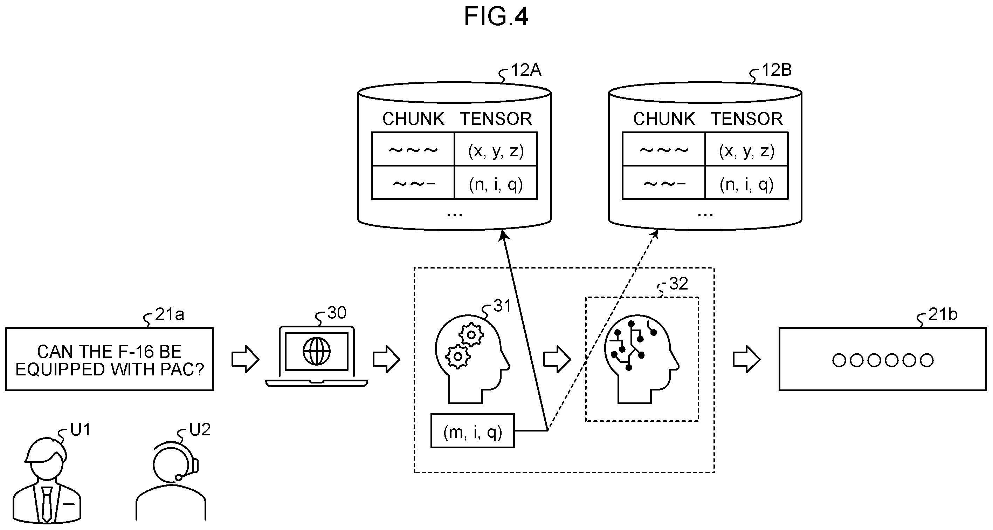

Reference Technique 1 is initially described. FIG. 4 is a diagram for describing Reference Technique 1. The reference apparatus suppresses information leakage by generating an index table 12A for the authorized user U1 and an index table 12B for the unauthorized user U2 in advance and switching the index tables to be used depending on credential information of a user to generate an answer sentence.

For example, upon acquiring credential information of the authorized user U1 and the question sentence 21a from the front end 30, the reference apparatus executes the processing described in FIG. 2 using the index table 12A to generate the answer sentence 21b.

On the other hand, upon acquiring the credential information of the unauthorized user U2 and the question sentence 21a from the front end 30, the reference apparatus executes the processing described in FIG. 2 using the index table 12B to generate the answer sentence 21b. Since the index table 12B is an index table for the unauthorized user U2, information leakage can be suppressed.

However, in Reference Technique 1, to suppress information leakage, the index table 12A for the authorized user U1 and the index table 12B for the unauthorized user U2 are generated, thus a large amount of resources is used. In particular, in a case where credential information differs for each of a plurality of users, an index table is generated for each user, which lacks practicality.

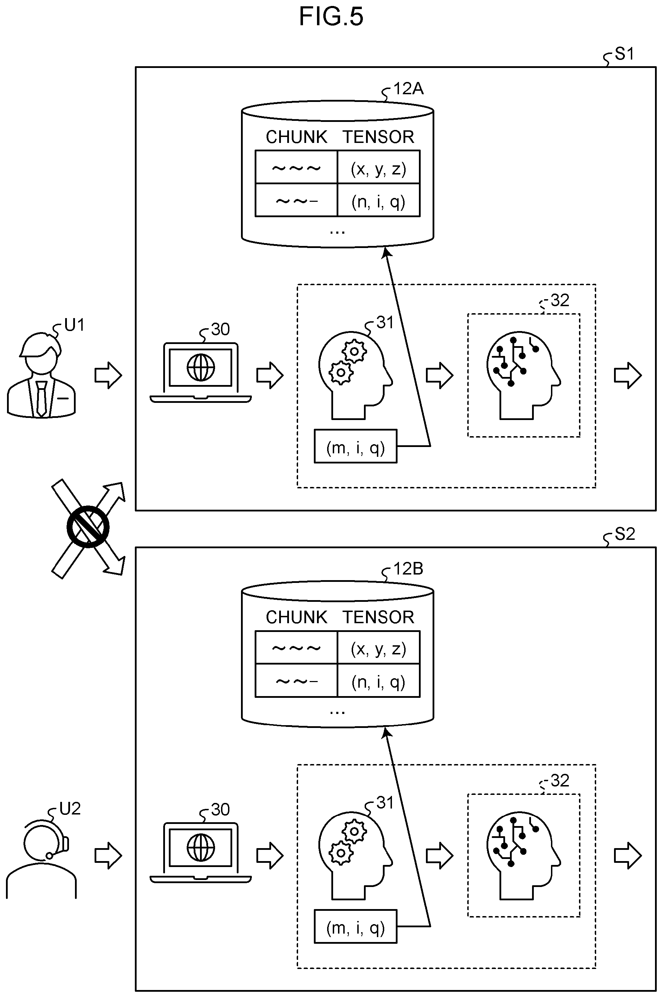

Subsequently, Reference Technique 2 is described. FIG. 5 is a diagram for describing Reference Technique 2. In Reference Technique 2, a system S1 for the authorized user U1 and a system S2 for the unauthorized user U2 are configured, and these systems are switched depending on the credential information of the users. For example, the system S1 includes the index table 12A, the front end 30, the embedding model 31, and the LLM model 32. The system S2 includes the index table 12B, the front end 30, the embedding model 31, and the LLM model 32. The descriptions regarding the index tables 12A and 12B, the front end 30, the embedding model 31, and the LLM model 32 are similar to those described above.

Upon receiving the credential information of the authorized user U1 and acquiring a question sentence, the reference apparatus executes the processing described in FIG. 2 using the system S1 to generate an answer sentence. On the other hand, upon receiving the credential information of the unauthorized user U2 and acquiring a question sentence, the reference apparatus executes the processing described in FIG. 2 using the system S2 to generate an answer sentence. In this manner, switching between the systems S1 and S2 depending on credential information of the user can suppress information leakage.

However, in Reference Technique 2, duplication of systems for suppressing information leakage results in significant resource consumption. For example, in a case where confidential information differs among a plurality of users, constructing a system for each user leads to a lack of practicality.

Reference techniques 1 and 2 are described above.

An information processing apparatus according to the present embodiment is now described. The information processing apparatus according to the present embodiment is referred to as an "information processing apparatus 100". The information processing apparatus 100 executes embedding processing and answer generation processing. The embedding processing and the answer generation processing will be described below in sequence.

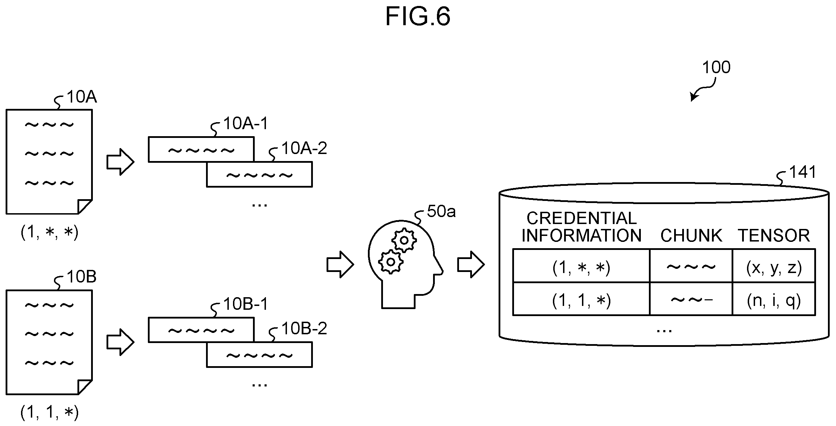

The embedding processing according to the present embodiment is first described. FIG. 6 is a diagram for describing the embedding processing according to the present embodiment. The information processing apparatus 100 executes the following processing using data 10A and 10B and generates an index table 141. The data 10A and 10B are text data or the like. The data 10A is assigned credential information (1, *, *). The data 10B is assigned credential information (1, 1, *).

The information processing apparatus 100 extracts a plurality of chunks 10A-1 and 10A-2 from the data 10A. In FIG. 6, the chunks 10A-1 and 10A-2 are illustrated for convenience of description, but examples of the chunks are not limited thereto, and chunks subsequent to the chunk 10A-2 may be included.

The chunks 10A-1 and 10A-2 are data obtained by extracting, from the data 10A, character strings each having a predetermined character length (e.g., 50 characters). Moreover, in the preceding and succeeding chunks, a portion of the character strings overlaps. For example, the chunk 10A-1 is a character string ranging from the beginning of the data 10A to the 50th character. The chunk 10A-2 is a character string ranging from the (1+n)-th character to the (50+n)-th character.

The information processing apparatus 100 calculates tensors of the chunks 10A-1 and 10A-2 using an embedding model 50a, associates the credential information (1, *, *), the chunks, and the tensors with each other, and registers the association in the index table 141. For example, when a tensor of the chunk 10A-1 is (x, y, z), the credential information (1, *, *), the chunk 10A-1, and the tensor (x, y, z) are associated with each other and registered in the index table 141. The information processing apparatus 100 repeatedly executes the above processing for each chunk extracted from the data 10A.

The information processing apparatus 100 extracts a plurality of chunks 10B-1 and 10B-2 from the data 10B. In FIG. 6, the chunks 10B-1 and 10B-2 are illustrated for convenience of description, but examples of the chunks are not limited thereto, and chunks subsequent to the chunk 10B-2 may be included.

The chunks 10B-1 and 10B-2 are data obtained by extracting, from the data 10B, character strings each having a predetermined character length (e.g., 50 characters). Moreover, in the preceding and succeeding chunks, a portion of the character strings overlaps. For example, the chunk 10B-1 is a character string ranging from the beginning of the data 10B to the 50th character. The chunk 10B-2 is a character string ranging from the (1+n)-th character to the (50+n)-th character.

The information processing apparatus 100 calculates tensors of the chunks 10B-1 and 10B-2 using the embedding model 50a, associates the credential information (1, 1, *), the chunks, and the tensors with each other, and registers the association in the index table 141. For example, when the tensor of the chunk 10B-1 is (n, i, q), the credential information (1, 1, *), the chunk 10B-1, and the tensor (n, i, q) are associated with each other and registered in the index table 141. The information processing apparatus 100 repeatedly executes the above processing for each chunk extracted from the data 10B.

As described above, by the information processing apparatus 100 executing the embedding processing, the index table 141 is generated in which the credential information of the data 10A, 10B, the chunks, and the tensors are associated with each other. In the following description, a set including the credential information, the chunks, and the tensor registered in the index table 141 is referred to as index information. In other words, the index table 141 includes a plurality of pieces of index information.

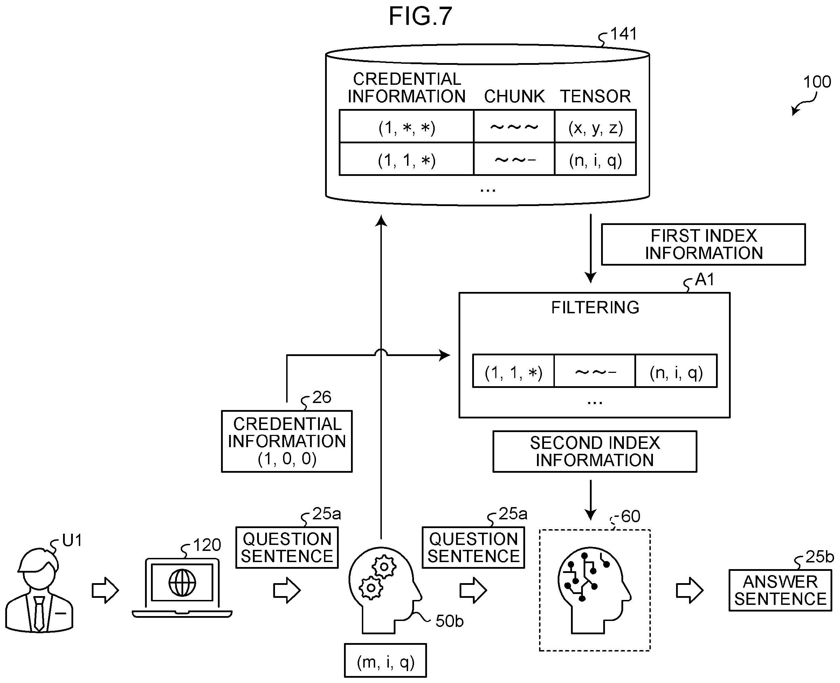

Subsequently, the answer generation processing according to the present embodiment is described. FIG. 7 is a diagram for describing the answer generation processing according to the present embodiment. A user U1 operates an input unit 120 such as a front end to log in to the information processing apparatus 100, and inputs a question sentence 25a and credential information 26. In the example illustrated in FIG. 7, the credential information 26 is (1, 0, 0).

The information processing apparatus 100 calculates a tensor of the question sentence 25a using an embedding model 50b. For example, the tensor of the question sentence 25a is represented as (m, i, q).

The information processing apparatus 100 compares the tensor (m, i, q) of the question sentence 25a with each tensor in the index table 141 and acquires index information associated with a tensor having a distance from the tensor (m, i, q) that is less than a threshold. In the following description, among the pieces of index information in the index table 141, the index information including a tensor having a distance from the tensor of the question sentence that is less than the threshold is referred to as "first index information". For example, the information processing apparatus 100 places the first index information in an area A1.

The information processing apparatus 100 executes filtering based on the credential information 26 and the credential information of each piece of the first index information to extract second index information. For example, the information processing apparatus 100 extracts, as the "second index information", the first index information having credential information that matches the credential information 26.

The information processing apparatus 100 generates the answer sentence 25b by inputting the second index information and the question sentence 25a into an LLM model 60. The information processing apparatus 100 causes the answer sentence 25b to be displayed on the display unit or the like.

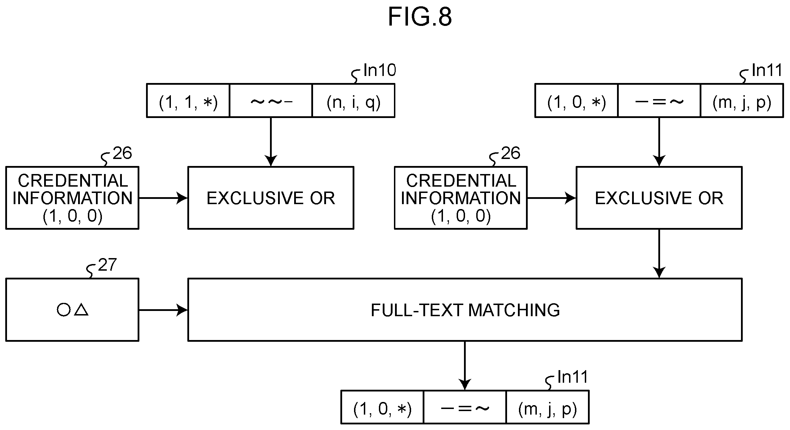

Here, the above-described filtering is described in more detail. FIG. 8 is a diagram for describing the filtering according to the present embodiment. In the example illustrated in FIG. 8, description is given using pieces of first index information In10 and In11 and the credential information 26. The credential information 26 is (1, 0, 0).

Each piece of first index information In10 and In11 includes credential information, a chunk, and a tensor. For example, the credential information of the first index information In10 is (1, 1, *), the chunk is "~~-", and the tensor is (n, i, q). The credential information of the first index information In11 is (1, 0, *), the chunk is "-=~", and the tensor is (m, j, p).

The information processing apparatus 100 calculates an exclusive OR (XOR) operation for each digit between the credential information of the first index information and the credential information 26, and acquires the first index information as a candidate for the second index information when calculation results for all digits result in zero. Moreover, the symbol "*" in the credential information indicates a "don't care" value. For example, the information processing apparatus 100 sets a result of the exclusive OR operation for a digit corresponding to "*" in the credential information to "0".

For example, when the information processing apparatus 100 calculates an exclusive OR operation for each digit between the credential information 26 and the credential information (1, 1, *) of the first index information In10, a result of (0, 1, 0) is yielded. For this reason, the information processing apparatus 100 excludes the first index information In10 from the candidates for the second index information.

When the information processing apparatus 100 calculates an exclusive OR operation for each digit between the credential information 26 and the credential information (1, 0, *) of the first index information In11, a result of (0, 0, 0) is yielded. For this reason, the information processing apparatus 100 sets the first index information In11 as a candidate for the second index information.

The information processing apparatus 100 performs full-text matching processing to determine whether a specific token 27 is included in a chunk of the candidate for the second index information. When the specific token 27 is not included in the chunk of the candidate for the second index information, the information processing apparatus 100 extracts, as the second index information, the candidate for the second index information. For example, the chunk of the first index information In11, which has become the candidate for the second index information, does not include the specific token. Accordingly, the information processing apparatus 100 extracts the first index information In11 as the second index information. In this case, the chunk of the first index information In11 indicates information permitted to be disclosed to the user U1.

As described above, the information processing apparatus 100 according to the present embodiment generates index information in which credential information, a chunk, and a tensor are associated with each other by executing the embedding processing described with reference to FIG. 6 in advance. Upon receiving a question sentence, the information processing apparatus 100 calculates a tensor of the question sentence and extracts the first index information based on the tensor of the question sentence and the tensor of the index information. When the credential information in the first index information matches the credential information of a user, the information processing apparatus 100 extracts such first index information as the second index information and inputs the second index information and the question sentence into the LLM model 60, and thereby generates an answer sentence.

Accordingly, suppression of information leakage during generation of an answer sentence to a question sentence is achieved. Furthermore, unlike Reference Techniques 1 and 2, the information processing apparatus 100 eliminates the need for constructing an index table for each user or a system for each user, and thus can be implemented with relatively fewer resources.

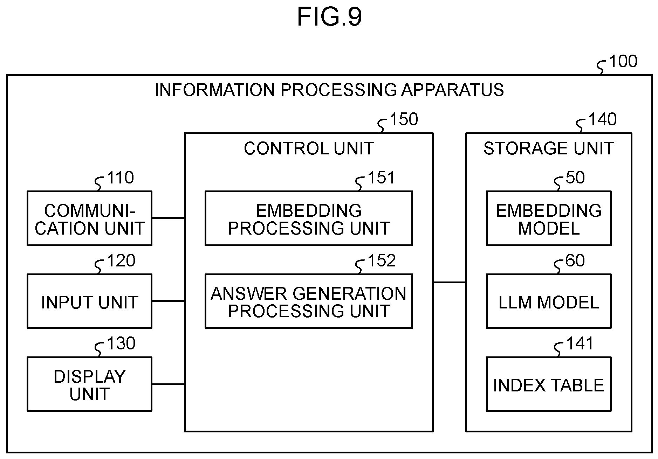

Next, an exemplary configuration of the information processing apparatus 100 according to the present embodiment is described. FIG. 9 is a functional block diagram illustrating a configuration of the information processing apparatus 100 according to the present embodiment. As illustrated in FIG. 9, the information processing apparatus 100 includes a communication unit 110, an input unit 120, a display unit 130, a storage unit 140, and a control unit 150.

The input unit 120 is an input device that inputs various types of information into the control unit 150 of the information processing apparatus 100. For example, a user operates the input unit 120 to input a question sentence and credential information.

The display unit 130 is a display device that displays information output from the control unit 150. For example, the display unit 130 displays an answer sentence generated by the control unit 150.

The input unit 120 and the display unit 130 correspond to the front end or the like.

The storage unit 140 includes an embedding model 50, an LLM model 60, and an index table 141. The storage unit 140 is memory or the like. Although not illustrated, the storage unit 140 may store other information used to execute the embedding processing and the answer generation processing.

The embedding model 50 is a model that calculates a tensor of a chunk. Examples of the embedding model 50 include Doc2Vec and Bidirectional Encoder Representations from Transformers (BERT). The embedding model 50 corresponds to the embedding models 50a and 50b described with reference to FIGS. 6 and 7.

The LLM model 60 is a large language model. The LLM model 60 has a tokenizer function and an attention function, and upon receiving an input of a question sentence and second index information, generates an answer sentence to the question sentence by using the chunk of the second index information as a clue. Other descriptions of the LLM model 60 are similar to those of the LLM model 60 described with reference to FIG. 7. In the example illustrated in FIG. 9, the LLM model 60 is stored in the storage unit 140, but an LLM model stored in an external server may also be used.

The control unit 150 includes an embedding processing unit 151 and an answer generation processing unit 152. The control unit is a CPU, a Graphics Processing Unit (GPU), or the like.

The embedding processing unit 151 executes embedding processing to generate index information in which credential information, a chunk, and a tensor are associated with each other, and registers the index information in the index table 141. Other descriptions regarding the embedding processing unit 151 are similar to those of the embedding processing described with reference to FIG. 6.

The answer generation processing unit 152 acquires a question sentence and credential information from a user, calculates a tensor of the question sentence, executes nearest-neighbor search processing based on the tensor of the question sentence and the tensor of the index information in the index table 141, and extracts the first index information.

When the credential information of the first index information matches the credential information of the user, the answer generation processing unit 152 extracts the first index information as the second index information, inputs the second index information and the question sentence into the LLM model 60, and thereby generates an answer sentence. The answer generation processing unit 152 outputs the generated answer sentence to the display unit 130 to cause the answer sentence to be displayed.

Other descriptions regarding the answer generation processing unit 152 are similar to those of the answer generation processing (filtering) described with reference to FIGS. 7 and 8.

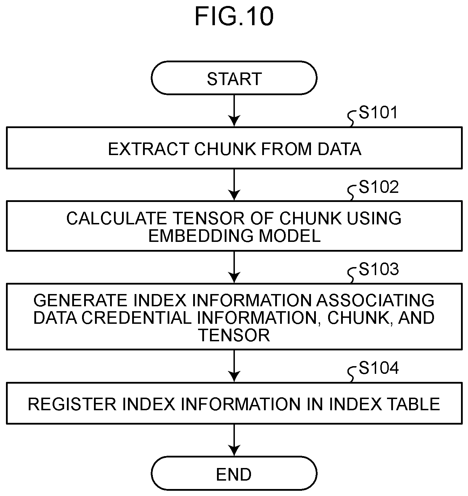

Next, an example of a processing procedure executed by the information processing apparatus 100 according to the present embodiment is described. FIG. 10 is a flowchart illustrating a processing procedure of the embedding processing executed by the information processing apparatus. As illustrated in FIG. 10, the embedding processing unit 151 of the information processing apparatus 100 extracts a chunk from data in units of a predetermined number of characters (step S101).

The embedding processing unit 151 calculates a tensor of the chunk using the embedding model 50a (step S102). The embedding processing unit 151 generates index information in which credential information of the data, the chunk, and the tensor are associated with each other (step S103).

The embedding processing unit 151 registers the index information in the index table 141 (step S104).

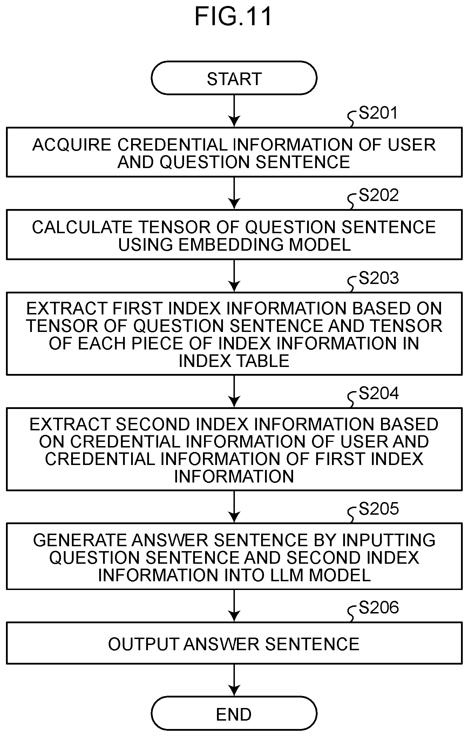

FIG. 11 is a flowchart illustrating a processing procedure of the answer generation processing executed by the information processing apparatus. As illustrated in FIG. 11, the answer generation processing unit 152 of the information processing apparatus 100 acquires credential information and a question sentence (step S201).

The answer generation processing unit 152 calculates a tensor of the question sentence using the embedding model 50b (step S202). The answer generation processing unit 152 extracts first index information based on the tensor of the question sentence and the tensor of each piece of index information in the index table 141 (step S203).

The answer generation processing unit 152 extracts second index information based on credential information of the user and the credential information of the first index information (step S204).

The answer generation processing unit 152 generates an answer sentence by inputting the question sentence and the second index information into the LLM model 60 (step S205). The answer generation processing unit 152 outputs the answer sentence (step S206).

Next, advantages of the information processing apparatus 100 according to the present embodiment are described. The information processing apparatus 100 generates index information in which credential information, a chunk, and a tensor are associated with each other by executing embedding processing in advance. Upon receiving a question sentence, the information processing apparatus 100 calculates a tensor of the question sentence and extracts the first index information based on the tensor of the question sentence and the tensor of the index information. When the credential information in the first index information matches the credential information of a user, the information processing apparatus 100 extracts such first index information as the second index information and inputs the second index information and the question sentence into the LLM model 60, and thereby generates an answer sentence.

Accordingly, suppression of information leakage during generation of an answer sentence to a question sentence is achieved. Furthermore, unlike Reference Techniques 1 and 2, the information processing apparatus 100 eliminates the need for constructing an index table for each user or a system for each user, and thus can be implemented with relatively fewer resources.

Subsequently, other processing operations executed by the information processing apparatus 100 are described. For example, in the embedding processing described with reference to FIG. 6, the credential information (1, *, *) is set for the data 10A, and the credential information (1, *, *) is set for all pieces of index information generated from chunks extracted from the data 10A, such that only a user having corresponding credential information is allowed to use the information, but the present disclosure is not limited to such example.

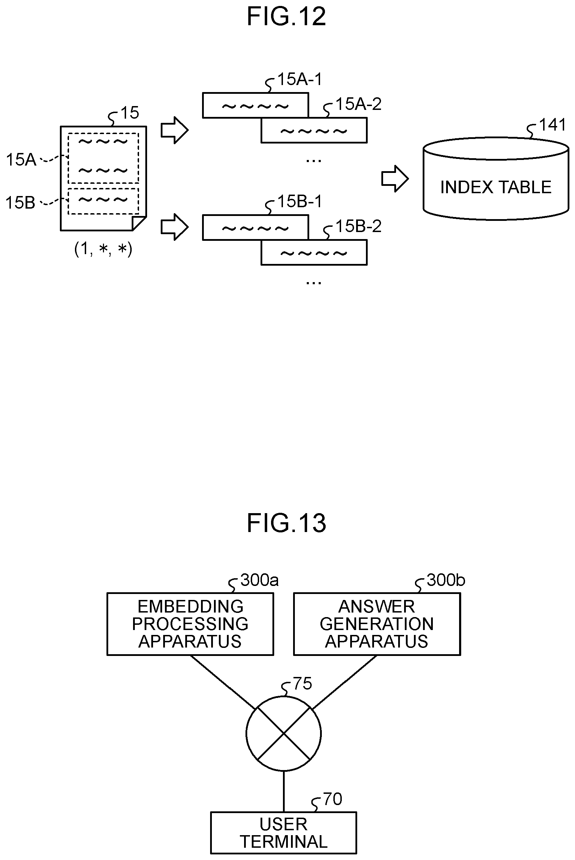

FIG. 12 is a diagram for describing other operations of embedding processing performed by the information processing apparatus. For example, credential information (1, *, *) is set for data 15. In addition, the data 15 includes data 15A that is available to a user having corresponding credential information and data 15B that is available to other users. The data 15A and 15B are specified in advance. For example, the data 15A is a character string including confidential information. The data 15B is a character string that does not include confidential information.

The information processing apparatus 100 extracts a plurality of chunks 15A-1 and 15A-2 from the data 15A. The information processing apparatus 100 calculates tensors of the chunks 15A-1 and 15A-2 using the embedding model 50a, and registers, in the index table 141, index information in which the credential information (1, *, *), the chunks, and the tensors are associated with each other.

The information processing apparatus 100 extracts a plurality of chunks 15B-1 and 15B-2 from the data 15B. The information processing apparatus 100 calculates tensors of the chunks 15B-1 and 15B-2 using the embedding model 50a. The information processing apparatus 100 sets, as credential information to be assigned to the chunks 15B-1 and 15B-2, credential information (*, *, *) that is referable by any user. The information processing apparatus 100 registers, in the index table 141, index information in which the credential information (*, *, *), the chunks, and the tensors are associated with each other. For example, the credential information (*, *, *) is "information permitted to be disclosed".

As described above, the information processing apparatus 100 assigns credential information of the data 15A to index information generated from the data 15A. On the other hand, credential information (*, *, *) is assigned to index information generated from the data 15B that is permitted to be used by any user. Accordingly, even if the index information is generated from the same data 15, index information usable by an authorized user and index information usable by an unauthorized user can be generated.

Meanwhile, in the embodiment described above, the information processing apparatus 100 executes the embedding processing and the answer generation processing, but a plurality of apparatuses may execute the respective processing operations. An example of an answer generation system in which the embedding processing and the answer generation processing are executed by different apparatuses is described below.

FIG. 13 is a diagram illustrating an example of an answer generation system. As illustrated in FIG. 13, the answer generation system includes a user terminal 70, an embedding processing apparatus 300a, and an answer generation apparatus 300b. The user terminal 70, the embedding processing apparatus 300a, and the answer generation apparatus 300b are mutually connected via a network 75. The embedding processing apparatus 300a is an example of a first apparatus. The answer generation apparatus 300b is an example of a second apparatus.

The user terminal 70 is a terminal device such as a personal computer (PC), a notebook PC, a tablet terminal, or a smartphone operated by a user. The user terminal 70 corresponds to a front end or the like. A user operates the user terminal 70 to log in to the answer generation apparatus 300b, transmits credential information and a question sentence to the answer generation apparatus 300b, and receives an answer sentence from the answer generation apparatus 300b.

The embedding processing apparatus 300a executes embedding processing to generate index information in which credential information, a chunk, and a tensor are associated with each other, and registers the index information in an index table (index table 141). The embedding processing apparatus 300a transmits the index table to the answer generation apparatus 300b. Other descriptions regarding the embedding processing apparatus 300a are similar to those regarding the embedding processing unit 151 described with reference to FIG. 9.

The answer generation apparatus 300b receives a question sentence and credential information from the user terminal 70, calculates a tensor of the question sentence, executes nearest-neighbor search processing based on the tensor of the question sentence and the tensor of the index information in the index table 141, and extracts first index information.

When the credential information of the first index information matches credential information of the user, the answer generation apparatus 300b extracts the first index information as second index information and inputs the second index information and the question sentence into the LLM model 60, and thereby generates an answer sentence. The answer generation apparatus 300b transmits the answer sentence to the user terminal 70. Other descriptions regarding the answer generation apparatus 300b are similar to those of the answer generation processing (filtering) described with reference to FIGS. 7 and 8.

An example of an answer generation system is described above.

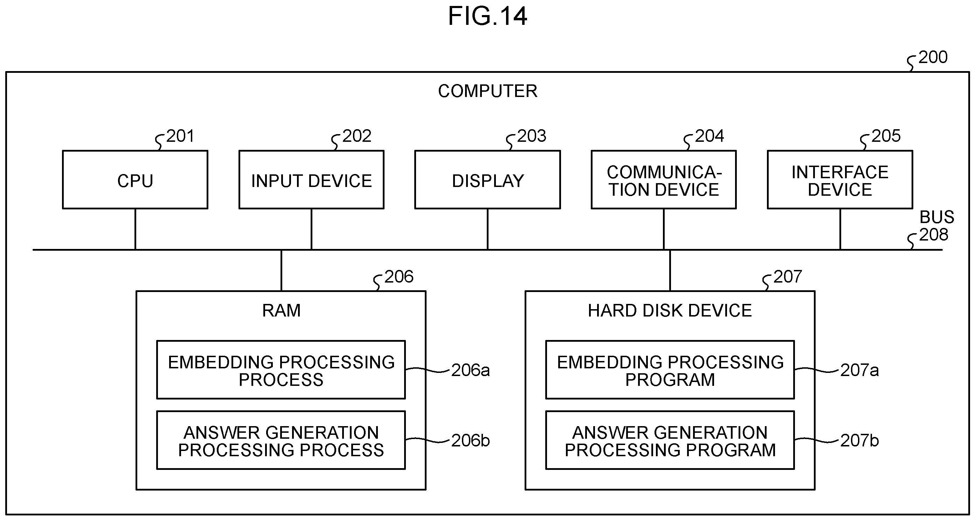

Next, an exemplary hardware configuration of a computer that implements functions similar to those of the information processing apparatus 100 described above is described. FIG. 14 is a diagram illustrating an exemplary hardware configuration of a computer that implements functions similar to those of the information processing apparatus according to the embodiment. As illustrated in FIG. 14, a computer 200 includes a CPU 201 that executes various types of computational processing, an input device 202 that receives input of data from a user, and a display 203. Further, the computer 200 includes a communication device 204 that exchanges data with an external device or the like via a wired or wireless network, and an interface device 205. In addition, the computer 200 includes a RAM 206 that temporarily stores various types of information, and a hard disk device 207. Furthermore, each of the devices 201 to 207 is connected to a bus 208.

The hard disk device 207 includes an embedding processing program 207a and an answer generation processing program 207b. In addition, the CPU 201 reads out the embedding processing program 207a and the answer generation processing program 207b and loads the programs into the RAM 206.

The embedding processing program 207a functions as an embedding processing process 206a. The answer generation processing program 207b functions as an answer generation processing process 206b.

The processing performed by the embedding processing process 206a corresponds to the processing of the embedding processing unit 151. The processing performed by the answer generation processing process 206b corresponds to the processing of the answer generation processing unit 152.

Moreover, the embedding processing program 207a and the answer generation processing program 207b are not limited to being stored initially in the hard disk device 207. For example, each program may be stored in a "portable physical medium" such as a flexible disk (FD), CD-ROM, DVD, magneto-optical disk, or IC card inserted into the computer 200. Then, the computer 200 may read and execute the embedding processing program 207a and the answer generation processing program 207b.

Suppression of information leakage during generation of an answer sentence to a question sentence is achieved.

## Claims

1. An answer generation method carried out by a computer (200), comprising:
assigning credential information to a plurality of pieces of index information in each of which a character string and a tensor are associated with each other in advance;
acquiring a question sentence from a user;
generating a tensor for the question sentence;
extracting, from the plurality of pieces of index information, first index information associated with a tensor close to the tensor for the question sentence, based on the tensor for the question sentence and tensors of the plurality of pieces of index information;
extracting, as second index information, the first index information to which the credential information matching credential information of the user is assigned, based on the credential information assigned to the first index information and the credential information of the user; and
generating an answer sentence to the question sentence based on the second index information.

2. The answer generation method according to claim 1, wherein the assigning of the credential information includes assigning the credential information to index information associated with a character string including confidential information, and assigning information permitted to be disclosed to index information associated with a character string that does not include the confidential information.

3. The answer generation method according to claim 2, further including extracting the first index information as the second index information when the information permitted to be disclosed is assigned to the first index information.

4. The answer generation method according to claim 1, wherein the extracting of the first index information includes extracting, as the first index information, index information including a tensor having a distance from the tensor for the question sentence that is less than a threshold.

5. The answer generation method according to claim 1, wherein the generating of the answer sentence includes generating the answer sentence by inputting the question sentence and the second index information into a large language model.

6. An answer generation system comprising:
a first apparatus (300a); and a second apparatus (300b),
wherein the first apparatus (300a) configured to assign credential information to a plurality of pieces of index information in each of which a character string and a tensor are associated with each other in advance, and transmit the plurality of pieces of index information to the second apparatus (300b),
the second apparatus (300b) configured to receive the plurality of pieces of index information,
the second apparatus (300b) configured to receive a question sentence from a terminal of a user,
the second apparatus (300b) configured to extract, from the plurality of pieces of index information, first index information associated with a tensor close to the tensor for the question sentence based on the tensor for the question sentence and tensors of the plurality of pieces of index information,
the second apparatus (300b) configured to extract, as second index information, the first index information to which the credential information matching credential information of the user is assigned based on the credential information assigned to the first index information and the credential information of the user, and
the second apparatus (300b) configured to generate an answer sentence to the question sentence based on the second index information.
